(19) Europäisches Patentamt / European Patent Office / Office européen des brevets

(11) **EP 3 127 873 B1**

(12) **EUROPEAN PATENT SPECIFICATION**

(45) Date of publication and mention
of the grant of the patent:
**30.01.2019 Bulletin 2019/05**

(51) Int Cl.:
**C02F 3/08** (2006.01)   **F04C 2/02** (2006.01)
**A01K 63/04** (2006.01)

(21) Application number: **16182330.7**

(22) Date of filing: **02.08.2016**

(54) **SPIRAL PUMP, DEVICE FOR TREATMENT OF WATER AND METHOD FOR THE PROVISION OF THE SPIRAL PUMP**

SPIRALPUMPE, VORRICHTUNG UND VERFAHREN ZUR BEREITSTELLUNG DER SPIRALPUMPE

POMPE EN SPIRALE, DISPOSITIF ET PROCÉDÉ POUR LA PROVISION DE LA POMPE EN SPIRALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.08.2015 NL 2015254**

(43) Date of publication of application:
**08.02.2017 Bulletin 2017/06**

(73) Proprietor: **Van Den Berg, Bart**
**3871 AB Hoevelaken (NL)**

(72) Inventor: **Van Den Berg, Bart**
**3871 AB Hoevelaken (NL)**

(74) Representative: **Verdijck, Gerardus et al**
**Arnold & Siedsma**
**Bezuidenhoutseweg 57**
**2594 AC The Hague (NL)**

(56) References cited:
**DE-A1- 2 919 221     GB-A- 2 134 400**
**US-A- 4 010 102**

**Description**

The invention relates to a spiral pump and a device for treating water comprising this spiral pump.

It is for instance desirable in the case of ponds with fish to clean the pond water. Solids, such as excreta of fish, leaves and filamentous algae, can be removed from the water with a mechanical filter. The water can however also comprise dissolved substances which have an adverse effect on the water quality. Examples of such substances are dissolved organic compounds such as ammonia or nitrates. In order to guarantee a good water quality the water has to be treated in order to reduce the concentration of these harmful substances. In a pond application the removal or degrading down of the dissolved substances is essential to the health of the fish. An unpleasant odour can in addition be prevented or at least reduced.

It is known per se to treat water by means of bacteria, also referred to as biological treatment or biological filtration. It is thus known from GB 2119783 to use a spiral pump for biological filtration of water. The spiral pump comprises a rotatable body with a number of coiled tubes. Water and air are taken up alternately into the tubes by rotating the body. This enhances the growth of aerobic bacteria in the tubes. The aerobic bacteria then degrade the harmful substances in the water. Also DE 2919221 discloses a spiral pump.

A drawback of such a conventional spiral pump for biological treatment is that the aeration of the water takes place in uncontrolled manner. The water is set into motion by the rotation of the spiral pump so that an alternating quantity of air and water is taken in each time. The growth of bacteria hereby takes place in uncontrolled manner, wherein optimal conditions are not usually created for the growth of the bacteria.

Another drawback of taking in alternate quantities of air and water is that the drive of the spiral pump is loaded unevenly, which results in wear of the spiral pump, a shortened lifespan and low efficiency.

An object of the invention is to obviate or at least reduce one or more of the above drawbacks and to provide an improved spiral pump, in particular for treating water.

This object is achieved with the spiral pump according to claim 1.

The device for instance comprises a drive, such as an electric motor, for rotating the pump body.

The pressure in the housing can be controlled by means of the pressure chamber. The water level can be set by controlling the pressure. The water level is hereby more constant and a drive for rotating the pump body is thus loaded in a more uniform manner, this reducing wear to the drive. The efficiency of the spiral pump is moreover increased. In an application of the spiral pump for biological treatment of water the reduction in undesired movements of the water results in more constant conditions for the growth of bacteria. A biofilm is for instance prevented from detaching from the wall of the channels of the spiral pump because of irregular movement of the water.

The water level is preferably set at the height of the rotation axis so that about half the pump body is always situated in the water.

Practical tests have shown that setting the water level in this way prevents undesired movement of the water. The pump body can hereby move as uniformly as possible, whereby the drive is loaded uniformly. Excessive wear to the drive is hereby prevented and the lifespan of the drive increased.

An optimal aeration of the water is hereby moreover achieved in the situation where the spiral pump is applied for biological treatment of water.

The water level in the exit of the spiral pump is preferably also set at the height of the rotation axis by adjusting the pressure in the pressure chamber, i.e. the exit is half filled with water. In a conventional spiral pump the air on the exit side will seek a path through the water, which results in the formation of air bubbles and an associated bubbling sound. Air and water are however separated on the exit side by half submerging the exit under water using the pressure chamber, so that no, or in any case fewer, air bubbles occur. This prevents noise nuisance. Because bubbles are not formed, or hardly so, on the outlet side, the spiral pump is moreover more energy-efficient than conventional spiral pumps.

The use of a pressure chamber further makes it possible to control the gas composition of the gas present in the housing. The pressure chamber in addition makes it possible to place the spiral pump below the water level of a basin of water for treating without this adversely affecting the operation of the spiral pump.

The above stated axis around which the pump body rotates is defined as an axis which coincides with a central longitudinal axis of the approximately cylindrical pump body. A physical shaft will usually be provided in practice for rotating the pump body. The pump body can be fixedly connected to the physical shaft for combined rotation of the shaft and the pump body, or conversely be arranged for rotation around the shaft.

The spiral pump according to the invention can be applied for biological treatment of water. Another possible application of the spiral pump according to the invention is however to pump liquids, in particular water. The advantage of a reduced wear to the drive is also gained in this application.

In a preferred embodiment the spiral pump further comprises means for controlling a gas pressure in the housing, the means comprising a gas feed, wherein the gas feed preferably comprises a pump.

The water level can be set and/or adjusted by controlling the gas pressure. The means for controlling the gas pressure in the housing are preferably configured to set the water level in the housing to a level at the height of the axis of the pump body. The pump body will thus always be situated roughly half in the water so that equal volumes of air and water are taken in at a time during use. The water can if desired be set to a different level by controlling the pressure. The ratio of the volume of water and air taken in can in this way be adjusted.

The gas feed preferably comprises a pump which supplies a gas such as air continuously.

By supplying a gas, preferably air, continuously the oxygen content in the pressure chamber is held constant. This is because the biofilm consumes oxygen from the air present in the housing.

In a further preferred embodiment the housing comprises an entry chamber which comprises the inlet and an exit chamber which is separated from the entry chamber and into which the outlet of the pump body debouches, wherein the gas feed is connected to the exit chamber for the purpose of pumping gas into the exit chamber, the housing further comprising a first conduit, of which a first outer end is positioned in the exit chamber at the height of the axis of the pump body and a second outer end is positioned in the entry chamber, and a second conduit, of which a first outer end is positioned in the entry chamber at the height of the axis of the pump body and a second outer end is positioned outside the housing.

In this embodiment the water level is controlled with mechanical means, i.e. an electronic controller is not necessary.

In an alternative embodiment an electronic control can be provided, the device for instance comprising a level sensor which is configured to measure a water level in the housing and a controller which is configured to control the gas feed on the basis of the water level measured by the level sensor for the purpose of setting the water level in the housing. The device optionally further comprises a valve which is preferably also controlled by the controller.

A desired water level is set using the controller. When the level sensor detects that the water level is above the desired water level, the controller can control the gas feed in order to increase the gas pressure in the housing so that the water level falls. A gas such as air is for instance pumped into the housing for this purpose. When the level sensor detects that the water level is below the desired water level, the controller can switch off the gas feed and open the valve in order to decrease the gas pressure in the housing so that the water level rises. The gas can alternatively be pumped out of the housing in order to thus reduce the pressure and allow the water level to rise.

In a preferred embodiment means are further provided for setting the gas composition in the pressure chamber.

The means for setting the gas composition comprise for instance a gas feed which is provided on the housing and a controller which is connected to the gas feed and a sensor for measuring the concentration of a determined gas, wherein the controller is configured to control the gas feed on the basis of the measured concentration. The gas feed for instance comprises a valve which is opened and closed by the controller on the basis of the measured concentration.

In another embodiment the means for setting the gas composition comprise a gas feed which carries a gas of the desired gas composition into the housing.

The means for setting the gas composition can if desired be combined with the means for setting the water level. One controller is for instance provided which controls the gas pressure in the housing as well as the gas composition in the housing. In another embodiment the gas pressure is controlled by means of the above described mechanical control wherein the gas feed is configured to supply gas of the desired gas composition.

The means for setting the gas composition preferably comprise means for setting the oxygen level in the pressure chamber.

The growth of aerobic bacteria can be stimulated by controlling the oxygen level, for instance increasing the oxygen level relative to the outside air. In a currently preferred exemplary embodiment the oxygen level is reduced, for instance by introducing nitrogen gas into the housing, in order to stimulate the growth of anaerobic bacteria and/or for denitrification of the water. The gas feed for instance supplies nitrogen gas with which both the pressure in the housing and the gas composition in the housing are set.

The spiral channels of the pump are for instance formed by means of spiral tubes.

The pump body however comprises a number of sheet-like walls which are wound into a spiral and which define the spiral channels.

In a currently preferred embodiment the walls are of plastic. The walls are for instance of polypropylene (PP) or polyvinyl chloride (PVC). Practical tests have shown that plastic walls allow a sufficient measure of growth of biofilm while preventing the creation of too dense a biomass whereby the device becomes clogged.

The pump body comprises a plurality of spiral channels, wherein a first outer end of each channel is located on an outer side of the pump body and forms an entrance opening, and a second outer end of each channel debouches into the outlet close to the axis.

Providing a plurality of channels, i.e. a plurality of pump passageways, increases the lift of the pump and the efficiency of the spiral pump.

Preferably, the entrance openings of the spiral channels are distributed uniformly over the outer side of the pump body. Particularly the distance between adjacent entrance openings is preferably substantially equal.

By distributing a plurality of entrance openings uniformly over the pump body the drive for rotating the pump body is loaded uniformly. Overload of the drive is hereby prevented and the lifespan of the drive increased.

The pump body comprises a plurality of sheet-like walls which are wound into a spiral and provided at a distance from each other so that a plurality of spiral channels are formed between the walls, wherein a first outer end of each channel is located on an outer side of the pump body and forms an entrance opening, and a second outer end of each channel debouches into the outlet close to the axis. Preferably, the entrance openings of the spiral channels are distributed uniformly over the outer side of the pump body.

More preferably, the walls have substantially the same form and are rotated in each case through the same predetermined angle relative to each other.

The angle can be determined by dividing 360 degrees by the number of walls. In an example with six walls and six entrance openings, the walls are rotated through an angle of 60 degrees relative to each other. The entrance openings are thus also 60 degrees removed from each other.

Provided in a further embodiment on each of the opposite end surfaces of the pump body and perpendicularly of the axis is a cover which forms a side wall of the at least one channel defined by the at least one sheet-like wall wound into a spiral.

The covers preferably support on either side the walls wound into a spiral. The covers are for instance embodied as discs fitting onto the end surfaces of the substantially cylindrical pump body.

The at least one channel has a diameter increasing from the entrance openings in the direction of the axis.

A biofilm forms on the side walls of the channels. The growth of this biofilm is in itself desirable in the context of the biological treatment of the water. However, too strong a growth of biofilm can result in blockage in the channel. A part of the biofilm will for instance occasionally be detached by the flowing water and be carried along with the water. In conventional devices this usually results in blockages. This has the result that the device has to be shut down and cleaned. Because the biomass is removed during the cleaning, it will then take some time before sufficient biomass is available again as breeding ground for the bacteria for cleaning the water. This makes conventional devices for treating water relatively inefficient and maintenance-intensive.

Because the diameter of the channels increases, the detached biofilm is prevented from causing a blockage further along in the channel. The spiral pump is therefore less likely to become blocked than conventional devices and requires less maintenance.

In a preferred embodiment the at least one channel follows a Fermat spiral. That is, the one or more channels can each be described as a part of a Fermat spiral.

A Fermat spiral can be defined as follows in polar coordinates:

$$r = a * \sqrt{\theta}$$

wherein r represents the radius, $\theta$ the angle and a represents a constant. In practice it will be the case that $\theta_{min} < \theta < \theta_{max}$, with $\theta_{min} > 0$, so that the wall does not continue to the origin.

In an example with three walls the walls are preferably rotated 120 degrees relative to each other. This can be expressed mathematically as follows:

$$r_1 = a * \sqrt{\theta_1} \qquad \text{with } \theta_{min} < \theta_1 < \theta_{max}$$

$$r_2 = a * \sqrt{(\theta_2 + 2\pi/3)} \qquad \text{with } \theta_{min} - 2\pi/3 < \theta_2 < \theta_{max} - 2\pi/3$$

$$r_3 = a * \sqrt{(\theta_3 + 4\pi/3)} \qquad \text{with } \theta_{min} - 4\pi/3 < \theta_3 < \theta_{max} - 4\pi/3,$$

wherein $(r_1, \theta_1)$ represent respectively the radius and angle of the first wall, $(r_2, \theta_2)$ represent respectively the radius and angle of the second wall and $(r_3, \theta_3)$ respectively the radius and angle of the third wall.

In an embodiment the spiral pump further comprises means for controlling the inflow speed of water into the inlet which are configured to adjust the inflow speed to 0.1 - 10 m/s, preferably 0.5 - 5 m/s and most preferably 1 - 3 m/s.

When the flow speed is too high the growth of the biofilm on the side walls of the channels will be prevented, while when the flow speed is too low too much biofilm is formed, resulting in blockages. Practical tests have shown that a flow speed of about 0.1 - 10 m/s, preferably 0.5 - 5 m/s and most preferably 1 - 3 m/s provides a good balance for the growth of a biofilm, so that the water is treated effectively while blockages due to excess growth of the biofilm are prevented.

The invention further relates to a device for biological treatment of water comprising the spiral pump as described above.

The invention further relates to a method for providing a spiral pump according to claim 9.

The method preferably comprises of providing a spiral pump as described above.

The device for biological treatment of water and the method according to the invention have the same advantages and effects as described above for the spiral pump.

The method preferably comprises of providing a gas with a pressure which differs from atmospheric pressure. In other words, a pressure greater than 1 bar prevails in the housing.

In a further preferred embodiment the method comprises of coupling the inlet of the housing to a basin with water to be treated and setting a desired water level in the housing by controlling the gas pressure in the pressure chamber, wherein the desired water level differs from the water level in the basin.

The gas pressure in the housing is for instance set above atmospheric pressure so that the spiral pump can be placed below the water level of the basin without the whole housing filling with water because of the water column on the entry side. This has the advantage that the spiral pump can be concealed underground without this affecting the operation of the spiral pump. In addition to an aesthetic advantage, this also has the advantage of reducing noise. Concealing the spiral pump is particularly relevant in the case of a pond, such as a pond for ornamental fish.

In a further preferred embodiment the method further comprises of controlling the gas composition in the pressure chamber, and preferably controlling the oxygen content, for instance by supplying nitrogen gas.

An alternative spiral pump is also mentioned here which corresponds to the above described embodiment of the spiral pump in which the at least one channel has a diameter increasing from the entrance openings in the direction of the axis, with the difference that the housing is not embodied as pressure chamber. In other words: the pressure chamber is optional. The alternative spiral pump comprises:

- a housing provided with an inlet for water; and
- a pump body which is accommodated in the housing and which is rotatable around an axis,
  wherein the pump body comprises at least one spiral channel,
  wherein a first outer end of the at least one spiral channel is located on an outer side of the pump body and forms an entrance opening for alternately taking in water and air through rotation of the pump body in the housing, and a second outer end of the at least one spiral channel debouches into an outlet close to the axis, wherein the at least one channel has a diameter increasing from the entrance openings in the direction of the axis.

The features of the above described embodiments of the spiral pump are similarly applicable for the alternative spiral pump. The features of claims 6-9 in particular can be applied to this alternative spiral, which is however not forming part of the invention.

The pump body comprises a number of sheet-like walls which are wound into a spiral and provided at a distance from each other so that a plurality of spiral channels are formed between the walls, wherein a first outer end of each channel is located on an outer side of the pump body and forms an entrance opening, and a second outer end of each channel debouches into the outlet close to the axis. The entrance openings are distributed uniformly over the outer side of the pump body, and the walls have substantially the same form and are rotated in each case through the same predetermined angle relative to each other. The at least one channel follows for instance a Fermat spiral. The spiral pump comprises means for controlling the inflow speed of water into the inlet which are configured to adjust the inflow speed to 0.1 - 10 m/s. A device for biological treamtnet of water comprising the alternative spiral pump is mentioned here as well.

Further advantages, features and details of the invention are elucidated on the basis of preferred embodiments thereof, wherein reference is made to the accompanying drawings.

- Figure 1 shows a pump body of a spiral pump according to an embodiment of the invention;
- Figure 2 shows the interior of the pump body of figure 1;
- Figure 3 shows an exploded drawing of the pump body of figures 1 and 2;
- Figure 4 shows a front view of the interior of the pump body of figures 1-3;
- Figure 5 shows a side view of the pump body of figures 1-4;

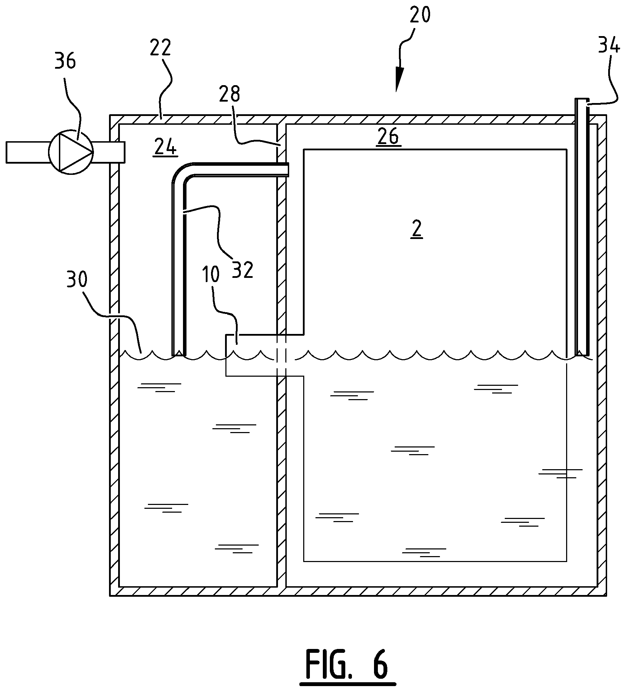

- Figure 6 shows a spiral pump according to an embodiment of the invention; and
- Figure 7 shows the spiral pump of figure 6 in a pond, wherein the water level in the spiral pump is lower than the water level in the pond.

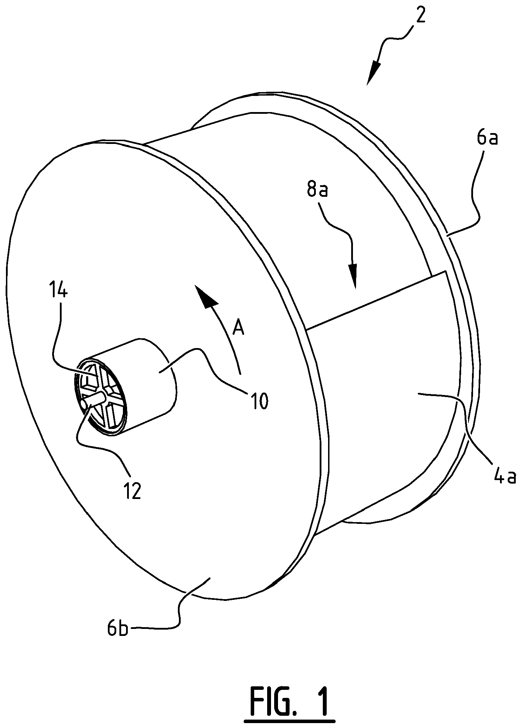

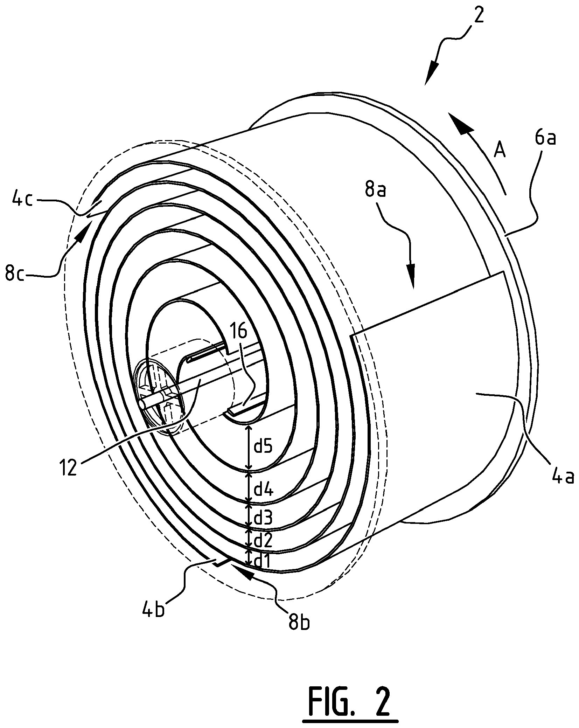

Pump body 2 (figures 1 and 2) comprises three sheet-like walls 4a, 4b, 4c which extend in spiral form. Walls 4a, 4b and 4c are provided at a distance from each other, wherein the spiral forms are interleaved such that three spiral channels are formed between the walls. Covers 6a, 6b in the shape of discs are arranged on either side of the pump body. Discs 6a, 6b form the side walls of the spiral channels between walls 4a, 4b and 4c. Walls 4a, 4b, 4c are for instance welded along their whole length to discs 6a, 6b.

Each channel has an outer end which is located on the outer side of pump body 2 and there forms an entrance opening 8a, 8b, 8c. The three entrance openings 8a, 8b, 8c are distributed uniformly over the outer wall. The angle between two adjacent entrance openings is in each case 120 degrees.

Situated on a rear side of pump body 2a is an outlet 10. The channels defined between walls 4a, 4b, 4c debouch into this outlet 10. In the shown embodiment pump body 2 is provided on a shaft 12 to which pump body 2 is rigidly connected. Pump body 2 is rotated by rotation of shaft 12 with a drive. Shaft 12 is driven by a drive (not shown) which can for instance comprise an electric motor. In use pump body 2 will rotate as according to arrow A. In the shown embodiment shaft 12 is connected via spokes 14 to outlet 10.

As shown in figure 2, the outer ends of walls 4a, 4b, 4c optionally comprise strengthening ribs 16. Additionally or alternatively, it is possible to provide walls 4a, 4b, 4c with such strengthening ribs close to entrance openings 8a, 8b, 8c. Using the strengthening ribs walls 4a, 4b, 4c can be given a thin form while no sagging occurs.

The diameter of the channels increases as seen from the periphery of pump body 2 in the direction of shaft 12. Diameter is understood in this context to mean the distance between the two walls 4a, 4b or 4c forming the associated channel. Shown in figure 2 are successive distances $d_1$, $d_2$, $d_3$, $d_4$, $d_5$ from the periphery of pump body 2 to central shaft 12 which are located on a line perpendicularly of shaft 12. As shown, it is the case that d1 < d2 < d3 < d4 < d5.

The diameter of the channels can alternatively take a substantially constant form, or the diameter can decrease in the direction of the shaft. A diameter of the channels increasing in the direction of the shaft does however have an advantage when the pump body 2 is applied in biological treatment, i.e. pump body 2 is less likely to become clogged.

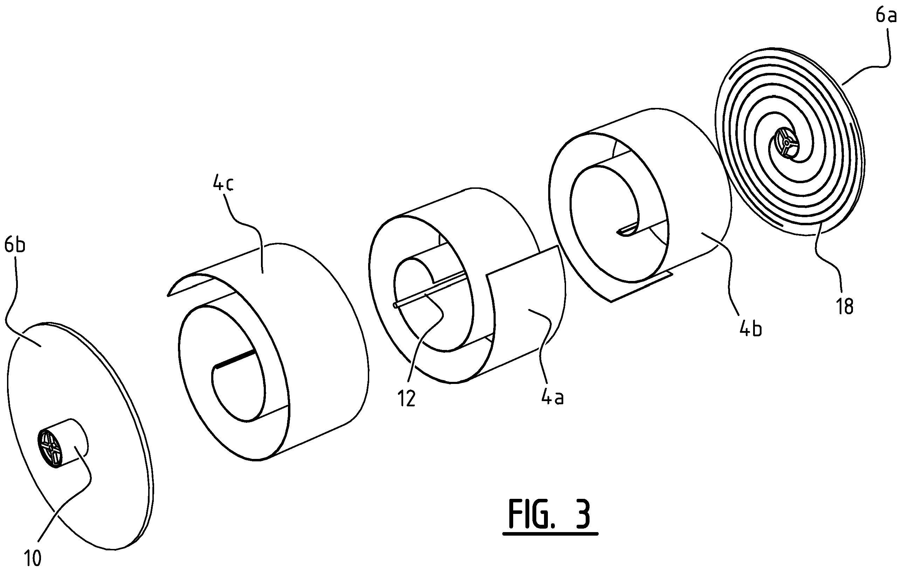

Discs 6a, 6b are provided with spiral protrusions 18 (figure 3), also referred to as edge or ridge, for the purpose of supporting walls 4a, 4b, 4c.

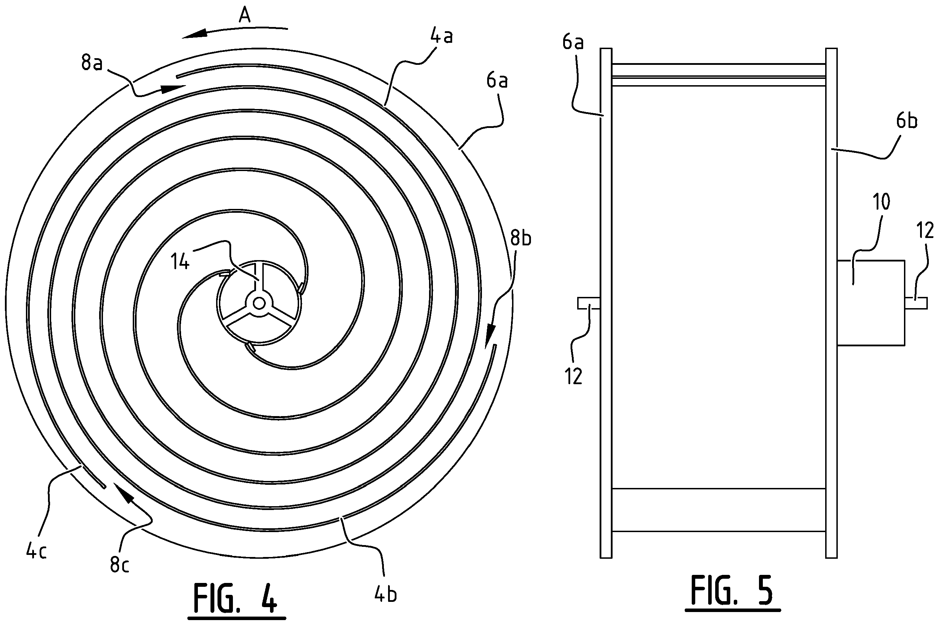

In the shown embodiment the spiral walls 4a, 4b, 4c each follow a Fermat spiral (figure 4). The efficiency of spiral pump 20 is improved by an increasing diameter in accordance with a Fermat spiral.

Pump body 2 is mounted on shaft 12 which extends on either side beyond discs 6a, 6b (figure 5).

In an embodiment spiral pump 20 comprises a housing 22 which is divided into two chambers: an exit chamber 24 and an entry chamber 26. Chambers 24, 26 of housing 22 are separated by partition wall 28. Provided during use in housing 20 is water 30 which is introduced via an inlet (not shown) into entry chamber 26 of housing 22. Pump body 2 is situated in entry chamber 26 so that entrance openings 8a, 8b, 8c can alternately take air and water into entry chamber 26. Outlet 10 of pump body 2 protrudes however through wall 28 and thereby debouches into exit chamber 24. The water leaves exit chamber 24 via an exit (not shown) of this chamber 24. A seal is further provided on outlet 10 in exit chamber 24 between outlet 10 and partition wall 28.

Housing 22 is embodied as a pressure chamber. Provided in exit chamber 24 is a conduit 32, a first outer end of which is located at the height of the rotation axis of pump body 2. The other outer end of conduit 32 is located some distance above the first outer end and protrudes through wall 28 into entry chamber 26. Entry chamber 26 comprises a conduit 34, a first outer end of which is located at the height of the rotation axis of pump body 2, while the other outer end of conduit 34 debouches outside housing 22. A pump 36 is moreover provided which is configured to pump air or another gas into exit chamber 24 of housing 22.

In use pump body 2 is rotated by means of a drive which engages on shaft 12. Entrance openings 8a, 8b, 8c alternately take in air and water. Pump 36 pumps air continuously into exit chamber 24, whereby an overpressure is created in exit chamber 24. The air can leave exit chamber 24 via the first outer end of conduit 32 positioned at the height of the rotation axis of pump body 2. The water level in exit chamber 24 will hereby remain at the height of the rotation axis. The air introduced via conduit 32 into entry chamber 26 will there likewise create an overpressure, wherein it is generally the case that $P_{exit\ chamber}$ > $P_{entry\ chamber}$. The air can escape from entry chamber 26 via a lower outer end of conduit 34 which is likewise positioned at the height of the rotation axis of pump body 2. The water level 30 in entry chamber 26 is thus also held at the height of the rotation axis of pump body 2. It is generally the case that $P_{exit\ chamber}$ > $P_{entry\ chamber}$ > $P_{atmospheric}$. In short, the water level is set at the height of the rotation axis of pump body 2 by the supply of air by means of pump 36 and conduits 24 and 26. Pump body 2 is thus always roughly half under water.

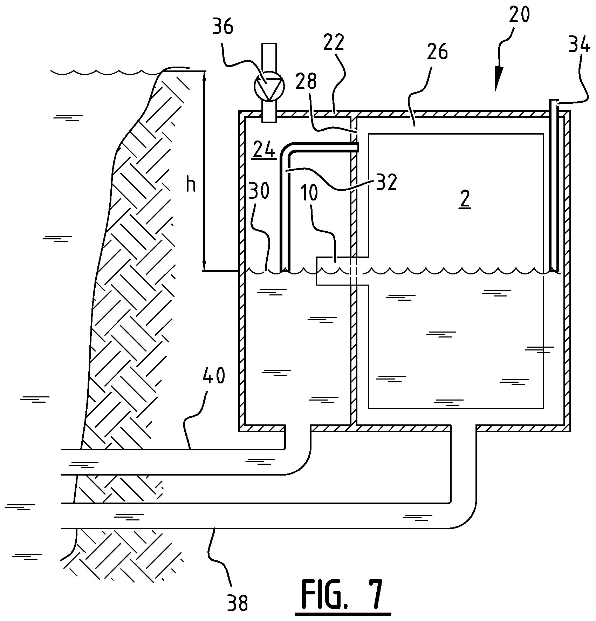

Spiral pump 2 is for instance used for biological treatment of pond water (figure 7). The water level in housing 22 is lower than the water level in the pond. The difference h in water level is possible because of the pressure built up in the housing 22 embodied as pressure chamber. The pond water to be treated is carried via an feed conduit 38 into housing 22. Feed conduit 38 debouches into a lower part of entry chamber 26, i.e. at a height below water level 30. Treated water can be fed back to the pond via discharge conduit 40. Discharge conduit 40 is provided on an underside of exit chamber 24, i.e. at a height below water level 30. It is noted that due to the pumping action of spiral pump 20 no additional pumps are necessary to feed the water into and out of the pond.

In the shown embodiment pond water is guided directly to spiral pump 20. In practice a mechanical filter will usually be present so that solids are filtered out of the water before the water is treated by means of spiral pump 20. Further devices can optionally be provided for the treatment of the water prior to or following biological treatment by spiral pump 20.

The present invention is by no means limited to the above described preferred embodiments thereof. The rights sought are defined by the following claims, within the scope of which many modifications can be envisaged. It is for instance possible in an alternative embodiment to use the outlet of the pump body as inlet, wherein the entrance openings of the pump body and the inlet of the spiral pump are used as outlets. The rotation direction of the pump body is reversed in this alternative embodiment relative to the rotation direction of the pump body as shown in the figures. The conduits and gas feed which control the pressure in the chambers of the housing are preferably modified in such an alternative embodiment. The gas feed is connected to chamber 26, which in this alternative embodiment forms an exit chamber, conduit 32 is likewise positioned in chamber 26 and conduit 34 is positioned in chamber 24, which in this alternative embodiment forms an entry chamber. The pressure in the exit chamber is in this way also higher in the alternative embodiment than the pressure in the entry chamber, which in turn is again greater than the atmospheric pressure.

**Claims**

1. Spiral pump (20), comprising:

   - a housing (22) provided with an inlet for water; and
   - a pump body (2) which is accommodated in the housing (22) and rotatable around an axis,

   wherein the pump body comprises spiral channels (4a, 4b, 4c),

   - wherein the pump body comprises a number of sheet-like walls which are wound into a spiral and which define the spiral channels, whereby the sheet-like walls are provided at a distance (d1, d2, d3, d4, d5) from each other so that a plurality of spiral channels are formed between the walls, wherein a first outer end of each channel is located on an outer side of the pump body and forms an entrance opening for alternately taking in water and air through rotation of the pump body in the housing, and a second outer end of each channel debouches into the outlet close to the axis, wherein the entrance openings are preferably distributed uniformly over the outer side of the pump body and the walls more preferably have substantially the same form and are rotated in each case through the same predetermined angle relative to each other; whereby the housing is embodied as pressure chamber; wherein the channels have a diameter increasing from the entrance opening in the direction of the axis.

2. Spiral pump as claimed in claim 1, further comprising means for controlling a gas pressure in the housing, the means comprising a gas feed, wherein the gas feed preferably comprises a pump.

3. Spiral pump as claimed in claim 2, wherein the means for controlling the gas pressure in the housing are configured to set the water level in the housing to a level at the height of the axis of the pump body.

4. Spiral pump as claimed in claim 3, the housing comprising an entry chamber (26) which comprises the inlet and an exit chamber (24) which is separated from the entry chamber and into which the outlet of the pump body debouches, wherein the gas feed is connected to the exit chamber for the purpose of pumping gas into the exit chamber, the housing further comprising a first conduit (32), of which a first outer end is positioned in the exit chamber at the height of the axis of the pump body and a second outer end is positioned in the entry chamber, and a second conduit, of which a first outer end is positioned in the entry chamber at the height of the axis of the pump body and a second outer end is positioned outside the housing.

5. Spiral pump as claimed in any of the foregoing claims, wherein means are provided for setting the gas composition in the pressure chamber, wherein the means for setting the gas composition preferably comprise means for setting the oxygen level in the pressure chamber.

6. Spiral pump as claimed in claim 1, wherein the at least one channel follows a Fermat spiral.

7. Spiral pump as claimed in any of the foregoing claims, further comprising means for controlling the inflow speed of water into the inlet which are configured to adjust the inflow speed to 0.1 - 10 m/s, preferably 0.5 - 5 m/s and most preferably 1 - 3 m/s.

8. Device for biological treatment of water comprising the spiral pump as claimed in any of the foregoing claims.

9. Method for providing a spiral pump (20) as in claim 1, comprising the following steps of:

- providing a housing (22) embodied as pressure chamber with an inlet for water; and
- accommodating in the housing a pump body (2) which is rotatable around an axis (12),

wherein the pump body comprises spiral channels, wherein the pump body comprises a number of sheet-like walls which are wound into a spiral and which define the spiral channels, whereby the sheet-like walls are provided at a distance (d1, d2, d3, d4, d5) from each other so that a plurality of spiral channels are formed between the walls, wherein a first outer end of each channel is located on an outer side of the pump body and forms an entrance opening for alternately taking in water and air through rotation of the pump body in the housing, and a second outer end of each channel debouches into the outlet close to the axis, wherein the entrance openings are preferably distributed uniformly over the outer side of the pump body and the walls more preferably have substantially the same form and are rotated in each case through the same predetermined angle relative to each other and wherein the channels have a diameter increasing from the entrance opening in the direction of the axis.

10. Method as claimed in claim 9, further comprising of providing a pressure in the housing which differs from atmospheric pressure.

11. Method as claimed in claim 10, further comprising of coupling the inlet of the housing to a basin with water to be treated and setting a desired water level in the housing by controlling the gas pressure in the pressure chamber, wherein the desired water level differs from the water level in the basin.

12. Method as claimed in any of the claims 9-11, further comprising of controlling the gas composition in the pressure chamber, and preferably controlling the oxygen content.

**Patentansprüche**

1. Spiralpumpe (20), die aufweist:

   - ein Gehäuse (22), das mit einem Einlass für Wasser versehen ist; und
   - einen Pumpenkörper (22), der in dem Gehäuse (22) aufgenommen ist und um eine Achse drehbar ist, wobei der Pumpenkörper Spiralkanäle (4a, 4b, 4c) aufweist,
   - wobei der Pumpenkörper eine Anzahl schichtartiger Wände aufweist, die in eine Spirale gewickelt sind und die die Spiralkanäle definieren, wobei die schichtartigen Wände in einem Abstand (d1, d2, d3, d4, d5) voneinander bereitgestellt sind, so dass mehrere Spiralkanäle zwischen den Wänden ausgebildet werden, wobei ein erstes äußeres Ende jedes Kanals auf einer Außenseite des Pumpenkörpers angeordnet ist und eine Eingangsöffnung zum abwechselnden Aufnehmen von Wasser und Luft durch die Drehung des Pumpenkörpers in dem Gehäuse bildet, und wobei ein zweites äußeres Ende jedes Kanals nahe der Achse in den Auslass mündet, wobei die Eingangsöffnungen vorzugsweise gleichmäßig über die Außenseite des Pumpenkörpers verteilt sind und die Wände bevorzugter im Wesentlichen die gleiche Form haben und in jedem Fall über den gleichen vorgegebenen Winkel relativ zueinander gedreht sind; wobei das Gehäuse als eine Druckkammer ausgeführt ist; wobei die Kanäle einen Durchmesser haben, der von der Eingangsöffnung in die Richtung der Achse zunimmt.

2. Spiralpumpe nach Anspruch 1, die ferner Einrichtungen zum Steuern eines Gasdrucks in dem Gehäuse aufweist, wobei die Einrichtungen eine Gaszufuhr aufweisen, wobei die Gaszufuhr vorzugsweise eine Pumpe aufweist.

3. Spiralpumpe nach Anspruch 2, wobei die Einrichtungen zum Steuern des Gasdrucks in dem Gehäuse aufgebaut sind, um den Wasserstand in dem Gehäuse auf einen Stand auf der Höhe der Achse des Pumpenkörpers festzulegen.

4. Spiralpumpe nach Anspruch 3, wobei das Gehäuse eine Eintrittskammer (26), die einen Einlass aufweist, und eine Austrittskammer (24), die von der Eintrittskammer getrennt ist und in die der Auslass des Pumpenkörpers mündet, aufweist, wobei die Gaszufuhr zu dem Zweck, Gas in die Austrittskammer zu pumpen, mit der Austrittskammer verbunden ist, wobei das Gehäuse ferner aufweist: einen ersten Kanal (32), von dem ein erstes äußeres Ende auf der Höhe der Achse des Pumpenkörpers in der Austrittskammer positioniert ist und ein zweites äußeres Ende in der Eintrittskammer positioniert ist, und einen zweiten Kanal, von dem ein erstes äußeres Ende auf der Höhe der Achse des Pumpenkörpers in der Eintrittskammer positioniert ist und ein zweites äußeres Ende außerhalb des Gehäuses positioniert ist.

**5.** Spiralpumpe nach einem der vorhergehenden Ansprüche, wobei Einrichtungen zum Festlegen der Gaszusammensetzung in der Druckkammer bereitgestellt sind, wobei die Einrichtungen zum Festlegen der Gaszusammensetzung vorzugsweise Einrichtungen zum Festlegen des Sauerstoffgehalts in der Druckkammer aufweisen.

**6.** Spiralpumpe nach Anspruch 1, wobei wenigstens ein Kanal einer Fermat-Spirale folgt.

**7.** Spiralpumpe nach einem der vorhergehenden Ansprüche, die ferner Einrichtungen zum Steuern der Zuströmungsgeschwindigkeit von Wasser in den Einlass aufweist, die aufgebaut sind, um die Zuströmungsgeschwindigkeit von 0,1 - 10 m/s, vorzugsweise 0,5 - 5 m/s und am bevorzugtesten 1 - 3 m/s, einzustellen.

**8.** Vorrichtung für die biologische Behandlung von Wasser, welche die Spiralpumpe nach einem der vorhergehenden Ansprüche aufweist.

**9.** Verfahren zur Bereitstellung einer Spiralpumpe (20) nach Anspruch 1, das die folgenden Schritte aufweist:

- Bereitstellen eines Gehäuses (22), das als eine Druckkammer mit einem Einlass für Wasser ausgeführt ist; und
- Aufnehmen eines Pumpenkörpers (2), der um eine Achse drehbar ist, in dem Gehäuse,

wobei der Pumpenkörper Spiralkanäle aufweist, wobei der Pumpenkörper eine Anzahl schichtartiger Wände aufweist, die in eine Spirale gewickelt sind und die die Spiralkanäle definieren, wobei die schichtartigen Wände in einem Abstand (d1, d2, d3, d4, d5) voneinander bereitgestellt sind, so dass mehrere Spiralkanäle zwischen den Wänden ausgebildet werden, wobei ein erstes äußeres Ende jedes Kanals auf einer Außenseite des Pumpenkörpers angeordnet ist und eine Eingangsöffnung zum abwechselnden Aufnehmen von Wasser und Luft durch die Drehung des Pumpenkörpers in dem Gehäuse bildet, und wobei ein zweites äußeres Ende jedes Kanals nahe der Achse in den Auslass mündet, wobei die Eingangsöffnungen vorzugsweise gleichmäßig über die Außenseite des Pumpenkörpers verteilt sind und die Wände bevorzugter im Wesentlichen die gleiche Form haben und in jedem Fall über den gleichen vorgegebenen Winkel relativ zueinander gedreht sind, und wobei die Kanäle einen Durchmesser haben, der von der Eingangsöffnung in die Richtung der Achse zunimmt.

**10.** Verfahren nach Anspruch 9, das ferner die Bereitstellung eines Drucks in dem Gehäuse, der sich von dem Atmosphärendruck unterscheidet, aufweist.

**11.** Verfahren nach Anspruch 10, das ferner aufweist: Koppeln des Einlasses des Gehäuses mit einem Becken mit Wasser, das behandelt werden soll, und Festlegen eines gewünschten Wasserstands in dem Gehäuse durch Steuern des Gasdrucks in der Druckkammer, wobei der gewünschte Wasserstand sich von dem Wasserstand in dem Becken unterscheidet.

**12.** Verfahren nach einem der Ansprüche 9 - 11, das ferner das Steuern der Gaszusammensetzung in der Druckkammer und vorzugsweise das Steuern des Sauerstoffgehalts aufweist.


**Revendications**

**1.** Pompe en spirale (20), comprenant :

- un boîtier (22) pourvu d'une arrivée pour eau ; et
- un corps de pompe (2) qui est logé dans le boîtier (22) et peut tourner autour d'un axe, dans lequel le corps de pompe comprend des canaux en spirale (4a, 4b, 4c),
- dans laquelle le corps de pompe comprend un certain nombre de parois de type feuille qui sont enroulées en une spirale et qui définissent les canaux en spirale, moyennant quoi les parois de type feuille sont disposées à une distance (d1, d2, d3, d4, d5) les unes des autres de telle sorte qu'une pluralité de canaux en spirale sont formés entre les parois, dans laquelle une première extrémité extérieure de chaque canal est située sur un côté extérieur du corps de pompe et forme une ouverture d'entrée pour admettre en alternance de l'eau et de l'air par rotation du corps de pompe dans le boîtier, et une seconde extrémité extérieure de chaque canal débouche dans la sortie près de l'axe, dans laquelle les ouvertures d'entrée sont de préférence réparties de manière uniforme sur le côté extérieur du corps de pompe et les parois ont plus préférablement sensiblement la même forme et sont tournées dans chaque cas selon le même angle prédéterminé les unes par rapport aux autres ;

moyennant quoi le boîtier est mis en oeuvre en tant que chambre de pression ;
dans laquelle les canaux ont un diamètre augmentant depuis l'ouverture d'entrée dans la direction de l'axe.

2. Pompe en spirale selon la revendication 1, comprenant en outre un moyen pour commander une pression de gaz dans le boîtier, le moyen comprenant une alimentation en gaz, dans laquelle l'alimentation en gaz comprend de préférence une pompe.

3. Pompe en spirale selon la revendication 2, dans laquelle le moyen de commande de la pression de gaz dans le boîtier est configuré pour régler le niveau d'eau dans le boîtier à un niveau à la hauteur de l'axe du corps de pompe.

4. Pompe en spirale selon la revendication 3, le boîtier comprenant en outre une chambre d'entrée (26) qui comprend l'arrivée et une chambre de sortie (24) qui est séparée de la chambre d'entrée et dans laquelle la sortie du corps de pompe débouche, dans laquelle l'alimentation en gaz est connectée à la chambre de sortie dans le but de pomper le gaz dans la chambre de sortie, le boîtier comprenant en outre un premier conduit (32), dont une première extrémité extérieure est positionnée dans la chambre de sortie à la hauteur de l'axe du corps de pompe et une seconde extrémité extérieure est positionnée dans la chambre d'entrée, et un second conduit, dont une première extrémité extérieure est positionnée dans la chambre d'entrée à la hauteur de l'axe du corps de pompe et une seconde extrémité extérieure est positionnée à l'extérieur du boîtier.

5. Pompe en spirale selon l'une quelconque des revendications précédentes, dans laquelle des moyens sont prévus pour régler la composition gazeuse dans la chambre de pression, dans laquelle les moyens de réglage de la composition gazeuse comprennent de préférence des moyens pour régler le niveau d'oxygène dans la chambre de pression.

6. Pompe en spirale selon la revendication 1, dans laquelle l'au moins un canal suit une spirale de Fermat.

7. Pompe en spirale selon l'une quelconque des revendications précédentes, comprenant en outre des moyens pour commander la vitesse d'écoulement entrant d'eau dans l'arrivée qui sont configurés pour ajuster la vitesse d'écoulement entrant à 0,1-10 m/s, de préférence à 0,5-5 m/s et idéalement à 1-3 m/s.

8. Dispositif pour traitement biologique d'eau comprenant la pompe en spirale selon l'une quelconque des revendications précédentes.

9. Procédé pour fournir une pompe en spirale (20) selon la revendication 1, comprenant les étapes suivantes de :

   - fourniture d'un boîtier (22) mis en oeuvre en tant que chambre de pression avec une arrivée pour eau ; et
   - logement dans le boîtier d'un corps de pompe (2) qui peut tourner autour d'un axe (12),

   dans lequel le corps de pompe comprend des canaux en spirale, dans lequel le corps de pompe comprend un certain nombre de parois de type feuille qui sont enroulées en une spirale et qui définissent les canaux en spirale, moyennant quoi les parois de type feuille sont disposées à une distance (d1, d2, d3, d4, d5) les unes des autres de telle sorte qu'une pluralité de canaux en spirale sont formés entre les parois, dans lequel une première extrémité extérieure de chaque canal est située sur un côté extérieur du corps de pompe et forme une ouverture d'entrée pour admettre en alternance de l'eau et de l'air par rotation du corps de pompe dans le boîtier, et une seconde extrémité extérieure de chaque canal débouche dans la sortie près de l'axe, dans lequel les ouvertures d'entrée sont de préférence réparties de manière uniforme sur le côté extérieur du corps de pompe et les parois ont plus préférablement sensiblement la même forme et sont tournées dans chaque cas selon le même angle prédéterminé les unes par rapport aux autres et dans lequel les canaux ont un diamètre augmentant depuis l'ouverture d'entrée dans la direction de l'axe.

10. Procédé selon la revendication 9, comprenant en outre la fourniture d'une pression dans le boîtier qui diffère de la pression atmosphérique.

11. Procédé selon la revendication 10, comprenant en outre l'accouplement de l'arrivée du boîtier à une bassine avec de l'eau à traiter et le réglage d'un niveau d'eau souhaité dans le boîtier par la commande de la pression de gaz dans la chambre de pression, dans lequel le niveau d'eau souhaité diffère du niveau d'eau dans la bassine.

12. Procédé selon l'une quelconque des revendications 9 à 11, comprenant en outre la commande de la composition gazeuse dans la chambre de pression, et de préférence la commande de la teneur en oxygène.

## FIG. 1

## FIG. 2

6a

18

4b

4a

12

4c

6b

10

FIG. 3

A

8a

4a

6a

8b

14

4c

8c

4b

FIG. 4

6a

6b

10

12

12

FIG. 5

**FIG. 6**

**FIG. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2119783 A
- DE 2919221